(19) **Europäisches Patentamt / European Patent Office / Office européen des brevets**

(11) **EP 2 762 332 B1**

(12) **EUROPEAN PATENT SPECIFICATION**

(45) Date of publication and mention
of the grant of the patent:
**08.03.2017 Bulletin 2017/10**

(21) Application number: **11873022.5**

(22) Date of filing: **28.09.2011**

(51) Int Cl.:
*B60C 11/03* (2006.01)   *B60C 11/04* (2006.01)

(86) International application number:
**PCT/JP2011/005470**

(87) International publication number:
**WO 2013/046266 (04.04.2013 Gazette 2013/14)**

(54) **PNEUMATIC TIRE FOR AN AUTO MOTORCYCLE**

LUFTREIFEN FÜR EIN ZWEIRÄDRIGES KRAFTFAHRZEUG

PNEU POUR MOTOCYCLETTE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**06.08.2014 Bulletin 2014/32**

(73) Proprietor: **Bridgestone Corporation
Tokyo 104-8340 (JP)**

(72) Inventors:
• **MAKIOKA, Toshiaki
Kodaira-shi
Tokyo 187-8531 (JP)**

• **YOSHIYA, Kazunori
Kodaira-shi
Tokyo 187-8531 (JP)**

(74) Representative: **Oxley, Robin John George et al
Marks & Clerk LLP
90 Long Acre
London WC2E 9RA (GB)**

(56) References cited:
EP-A1- 2 554 403     WO-A1-2010/073279
WO-A1-2010/073281   WO-A1-2011/118186
JP-A- 2006 321 287   JP-A- 2007 331 596
JP-A- 2009 029 176   JP-A- 2010 285 103

**Description**

TECHNICAL FIELD

The present invention relates to a pneumatic tire for an auto motorcycle, in particular, proposes a technology capable of improving grip performance against a dry road while ensuring drainage performance during running on a wet road, and also capable of attaining excellent wear resistance.

BACKGROUND ART

In a pneumatic tire for an auto motorcycle, various tread patterns are formed by changing, in multiple ways, combinations of the number and the shapes of grooves formed on a tread portion of the tire, to thereby improve various performances (such as drainage performance under wet condition and noise reduction during running) (see, for example, JP H4-238703 A (PTL 1)).

Document JP 2010-285103 A discloses a pneumatic tire for motorcycle comprising the features of the preamble of claim 1.

CITATION LIST

Patent Literature

PTL 1: JP H4-238703 A

SUMMARY OF INVENTION

(Technical Problem)

Meanwhile, in order to increase, as one example of the tire performance, grip performance against a dry road and to improve wear resistance, it is effective to increase the land portion of the tread portion. However, along with the increase in the land portion, the groove portion in the tread portion is decreased in ratio, which makes it difficult to maintain drainage performance.

On the other hand, when the groove portion of the tread portion is increased in ratio for the purpose of ensuring drainage performance, the land portion hits a road surface upon coming into contact therewith, which in turn leads to generation of noise, making it difficult to maintain noise-reduction performance of the tire.

As described above, it is extremely difficult to maintain, in a balanced manner, various kinds of performance of the tire, such as drainage performance, grip performance, wear resistance, and even noise-reduction performance all in excellent state, and a conventional tread pattern has been insufficient to meet such demand. In addition, as greater emphasis is placed on environmental issues, a further improvement in noise-reduction performance is given top priority among other kinds of performance of the tire.

One of the main objects of the present invention is to provide a pneumatic tire excellent in wear resistance while being improved in grip performance against a dry road, without impairing drainage performance of the tire in running on a wet road. Then, another object of the present invention is to provide a novel pneumatic tire for an auto motorcycle which is capable of reducing noise during running, in addition to ensuring the aforementioned various kinds of performance.

(Solution to Problem)

The present invention provides a pneumatic tire for an auto motorcycle, having a directional tread pattern including a plurality of different grooves formed on a tread surface, the grooves each converging forward in a rotation direction of the tire, in which:

the plurality of different grooves are formed as three different oblique lug grooves extending, in a development plan view of the tread pattern, from a tread contact end of the tire to a tire equator line as being curved to be deflected to the tire equator line side;

the three different oblique lug grooves include a first oblique lug groove having an extending length of $\alpha$, a second oblique lug groove having an extending length of $\beta$, and a third oblique lug groove having an extending length of $\gamma$, the extending lengths $\alpha$, $\beta$, $\gamma$ satisfying the following Expressions (I), (II):

$$\beta \leq \gamma < \alpha \ (I),$$

$$1-\beta/\alpha < 0.1 \ (II);$$

and

the number $n$ of the oblique lug grooves each intersecting with a meridian of the tire is defined to satisfy the following Expression (III): $n \geq 4$ (III), over a range of 60 % to 70 % of the entire circumference of the tire.

Here, it is preferred that the aforementioned tread pattern include, in a development plan view, four regions for one pitch in the circumferential direction, the four regions being obtained by equally dividing the tread width into quarters from the tire equator line to the tread contact end; and the four regions preferably include a second region A and a third region B to the tire equator line, the second region A and the third region B each having a negative ratio a and a negative ratio b, respectively, the negative ratio a and the negative ratio b being different from each other by less than 0.01.

Further, the present invention provides a pneumatic tire for an auto motorcycle, including a tread pattern having at least three different oblique lug grooves formed on a tread surface of the tire, the grooves each extending as converging forward in the rotation direction of the tire from a contact end side to a tire equator line side,

the tread surface including half-width regions across the tire equator line serving as a boundary,

the at least three different oblique lug grooves being independently disposed while being dispersed in each of the half-width regions,

the at least three different oblique lug grooves being arranged so as to be line-symmetric, for each type, about the tire equator line as an axis of symmetry while being displaced from each other in the tire circumferential direction between the half-width regions,

in which the at least three oblique lug grooves includes a central oblique lug groove disposed in a center region which accounts for an area of 12.5 % of the tread contact width from the tire equator line, the central oblique lug groove extending in a direction that allows an angle between a groove center line thereof and the tire equator line to fall within a range of 9° to 23° while having an extending length of 120 mm or less over the entire length thereof.

In this case, it is preferred that the central oblique lug groove extend from the tire equator line to an intermediate region falling within a range of 12.5 % to 25 % of the tread contact width; and that the central oblique lug groove extend, in a portion which lies in the intermediate region falling within a range of 12.5 % to 25 % of the tread contact width from the tire equator line, in a direction that allows an angle between a groove center line thereof and the tire equator line to fall within a range of 21° to 36°.

Further, it is preferred that, of the at least three different oblique lug grooves, at least two different oblique lug grooves be disposed in the intermediate region falling within a range of 12.5 % to 25 % of the tread contact width from the tire equator line; and that, of the at least three different oblique lug grooves, at least an oblique lug groove other than the central oblique lug groove be disposed in an intermediate region falling within a range of 25 % to 37.5 % of the tread contact width from the tire equator line.

Still further, it is preferred that, of the three different oblique lug grooves, at least two different oblique lug grooves other than the central oblique lug groove be curved so that the outside of the curve is directed toward the tire equator line side.

Moreover, it is preferred that the oblique lug grooves other than the central oblique lug groove be each disposed, by 60 % or more of the opening area thereof, in a region on the outside in the tire width direction of the outermost end of the central oblique lug groove in the tire width direction of the central oblique lug groove.

(Advantageous Effect of Invention)

In a pneumatic tire for an auto motorcycle according to the present invention, a tread pattern is formed of a set of three different oblique lug grooves which satisfy the aforementioned Expressions (I) to (III). Accordingly, even when the contact area of the tire is gradually changed in the width direction of the tread surface in accordance with a camber angle applied thereto, grooves of the same type are still present in the contact area, to thereby maintain uniform the relation between the drainage performance and the grip performance. Further, the oblique lug grooves are each formed so as to extend from the tread contact end to the tire equator line as being curved to be deflected to the tire equator line side, so that the oblique lug grooves extend along the advancement direction of the tire that varies according to the change in the camber angle, which can further improve the drainage performance. With this configuration, the negative ratio can be reduced while ensuring excellent drainage performance, and further grip performance can be improved while increasing wear resistance.

Further, when the tread width from the tire equator line to the tread contact end is equally divided into quarters so as to form four regions for one pitch in the circumferential direction of the tread surface, and a second region *A* and a third region *B* of the four regions from the tire equator line are different from each other in negative ratio by less than 0.01, the area of the land portion in the contact area hardly changes regardless of the change in camber angle, so that the grip performance can be maintained further uniform.

Then, another pneumatic tire of the present invention includes a tread pattern including at least three different oblique lug grooves formed on a tread surface of the tire, the grooves each extending as converging forward in the rotation direction of the tire from a contact end side to a tire equator line side, the tread surface including half-width regions across the tire equator line serving as a boundary, the at least three different oblique lug grooves being independently disposed while being dispersed in each of the half-width regions, the at least three different oblique lug grooves being arranged so as to be line-symmetric, for each type, about the tire equator line as an axis of symmetry while being displaced from each other in the tire circumferential direction between the half-width regions, in which the at least three oblique lug grooves includes a central oblique lug groove disposed in a center region which accounts for an area of 12.5 % of the tread contact width from the tire equator line, the central oblique lug groove extending in a direction that allows an angle between a groove center line thereof and the tire equator line to fall within a range of 9° to 23° while having an extending length of 120 mm or less over the entire length thereof, to thereby ensure the drainage performance while attaining improvement in wear resistance and noise reduction.

BRIEF DESCRIPTION OF DRAWINGS

The present invention will be further described below with reference to the accompanying drawings, wherein:

FIG. 1 is a development plan view of a tread pattern of a tire, which illustrates an embodiment of a pneumatic tire for an auto motorcycle according to the present invention;

FIG. 2 is a development plan view of a tread pattern of a tire, which illustrates an embodiment of another pneumatic tire for an auto motorcycle according to the present invention;

FIG. 3 is a development plan view of a tread pattern of a tire, which illustrates further another embodiment of another pneumatic tire for an auto motorcycle according to the present invention;

FIG. 4 is a development plan view of a tread pattern of a conventional tire; and

FIG. 5 is a development plan view of a tread pattern of a conventional front-wheel tire.

DESCRIPTION OF EMBODIMENTS

In the following, embodiments of a pneumatic tire for an auto motorcycle according to the present invention are described in detail with reference to the drawings. The pneumatic tire for an auto motorcycle according to the present invention includes, although not shown, toroidal carcasses disposed through side portions extending outwardly in a radial direction from a pair of bead portions, so as to be mutually connected across the side portions, and also includes a belt and a tread on the outside in the tire radial direction of the crown region of the carcasses.

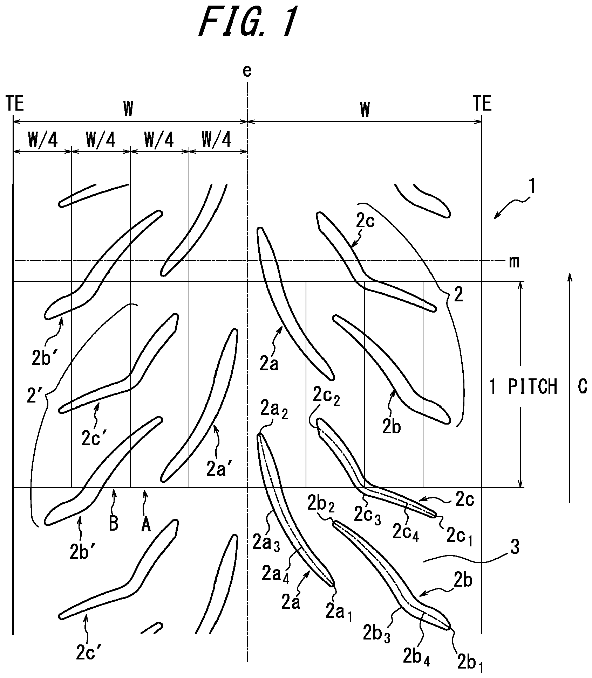

FIG. 1 illustrates an embodiment of a pneumatic tire for an auto motorcycle (hereinafter, referred to as "tire") according to the present invention, in which a tread surface 1 of the tire is shown. The tread surface 1 is divided into two regions across a tire equator line e, and one or a plurality of sets 2 of three different oblique lug grooves are arranged in each of the two regions in the tire circumferential direction and in the tire width direction, so as to be line-symmetric to each other about the tire equator line e serving as the axis of symmetry, to thereby form a tread pattern. Here, the tread pattern may also be formed, as illustrated in FIG. 1, by arranging the sets 2 on one side across the tire equator line *e* as being spaced apart at a predetermined pitch in the circumferential direction, while arranging sets 2' which bear a line-symmetrical relation to the sets 2 across the equator line *e*, at the same pitch as the sets 2, so that the sets 2 and the sets 2' thus arranged may be displaced (by half the pitch in the illustrated example) from each other in the circumferential direction. The remaining portion of the tread surface 1, other than the portions where the oblique lug grooves are formed, is formed as a land portion 3.

Then, the sets 2 of the oblique lug grooves each include a first incline lug groove 2a, a second oblique lug groove 2b, and a third oblique lug groove 2c, which are disposed without overlapping one another. The oblique lug grooves 2a to 2c forming the respective sets 2 can be freely arranged in the tire width direction and circumferential direction, with no limitations on the arrangement order thereof. The oblique lug grooves 2a to 2c all have posterior ends (trailing end relative to the rotation direction) $2a_1$ to $2c_1$ disposed on the outside in the width direction of the tread surface 1, and extend, from the posterior ends of the grooves, along a direction (direction indicated by an arrow C of FIG. 1) to the front side in the forward rotation direction of the tire, toward the tire equator line *e* as being curved to be deflected to the tire equator line side, so that the anterior ends $2a_2$ to $2c_2$ are positioned on the tread center region side.

Further, the oblique lug grooves 2a to 2c have convex portions $2a_3$ to $2c_3$ as curved portions, which are formed to be positioned on a side where the oblique lug grooves are each at an acute angle to the tire equator line e. Here, the angle between each of the oblique lug grooves 2a to 2c and the tire equator line e refers to an angle between a tangent to each center line $2a_4$ to $2c_4$ passing through the center in the width direction of each of the oblique lug grooves at each of the anterior ends $2a_2$ to $2c_2$ of the grooves and the tire equator line $e$.

The oblique lug grooves 2a' to 2c' disposed on the left across the tire equator line $e$ are symmetric in shape to the oblique lug grooves 2a to 2c, as in the relation between the set 2' and the set 2 described above, and thus similar to the oblique lug grooves 2a to 2c, except in that the oblique lug grooves 2a' to 2c' are oppositely oriented across the tire equator line $e$. Thus, the oblique lug grooves 2a' to 2c' can be identified as the same type of the oblique lug grooves 2a to 2c, satisfying the features of the oblique lug grooves 2a to 2c.

Further, the oblique lug grooves 2a to 2c are each configured to satisfy the following Expressions (I), (II): $\beta \leq \gamma < \alpha$ (I), $1-\beta/\alpha < 0.1$ (II), where $\alpha$ is the extending length of the first oblique lug groove 2a, $\beta$ is the extending length of the second oblique lug groove 2b, and $\gamma$ is the extending length of the third oblique lug groove 2c, and also the number $n$ of the oblique lug grooves 2a to 2c each intersecting with a meridian $m$ of the tire is defined to satisfy the following Expression (III): $n \geq 4$ (III) (where the oblique lug grooves are assumed to be disposed within a range of 60 % to 70 % of the entire circumference of the tire). Here, the extending lengths $\alpha$, $\beta$, $\gamma$ of the oblique lug grooves correspond to the lengths along the center lines $2a_4$ to $2c_4$ of the oblique lug grooves. The meridian $m$ is a line perpendicular to the tire equator line $e$, and the number of the oblique lug grooves intersecting with the meridian $m$ of the tire corresponds to the number (n=4 in the illustrated example) of the oblique lug grooves intersecting with the meridian $m$ of the tire in the development plan view of the tread pattern as illustrated in FIG. 1. Further, the above Expression (III) means that a region where four or more oblique lug grooves intersect with the meridian $m$ of the tire accounts for 60 % to 70 % of the entire circumferential length of the tire.

The oblique lug grooves 2a to 2c according to the present invention each have the convex portions $2a_3$ to $2c_3$, respectively, which are oriented in the same direction while satisfying the aforementioned Expressions (I) to (III). Accordingly, even when the contact area of the tire is varied in the width direction of the tread surface in accordance with a camber angle applied thereto, grooves of the same type are still present in the contact area with being hardly changed in shape or ratio of the grooves, to thereby maintain substantially uniform the relation between the drainage performance and the grip performance relative to the tilt of the tire. Further, the tire, which starts to corner in the tilted direction when a camber angle is applied thereto, has the oblique lug grooves 2a to 2c formed so as to extend from the outside in the tire width direction along the forward rotation direction of the tire toward the tire equator line $e$ as being curved to be deflected to the tire equator line side while having the convex portion of the curve directed to the center of the tire, so that the extending directions of the oblique lug grooves in the contact area follow the advancement direction of the tire that varies according to the change in the camber angle, to thereby improve drainage performance. Along with the improvement in drainage performance of the tire as described above, the number of oblique lug grooves can be reduced accordingly, so as to secure the minimum number of oblique lug grooves required to satisfy the drainage performance of the tire while saving unnecessary oblique lug grooves, to thereby reduce the negative ratio, with the result that the wear resistance as well as the grip performance can be improved.

In the aforementioned tread pattern 1, with reference to the development plan view of the tread pattern of FIG. 1, when a length $W$ from the tire equator line $e$ to a tread contact end $TE$ is equally divided into quarters so as to form four regions for one pitch in the circumferential direction, it is further preferred that a second region $A$ and a third region $B$ from the tire equator line $e$ have a negative ratio $a$ and a negative ratio $b$, respectively, the negative ratio $a$ and the negative ratio $b$ being different from each other by less than 0.01. The negative ratio herein refers to a ratio of an area occupied by grooves to an area of a tread surface defined by a predetermined range. The starting point to take out one pitch in the circumferential direction may be any of the grooves in the set 2.

When the regions $A$, $B$ each serve as a contact area of the tire, the tire is tilted as being applied with a camber angle, and therefore a grip force is required. In this case, the area of the land portion 3 in the contact area of the tire hardly changes between the regions $A$ and $B$, so that the grip performance can be maintained further uniform.

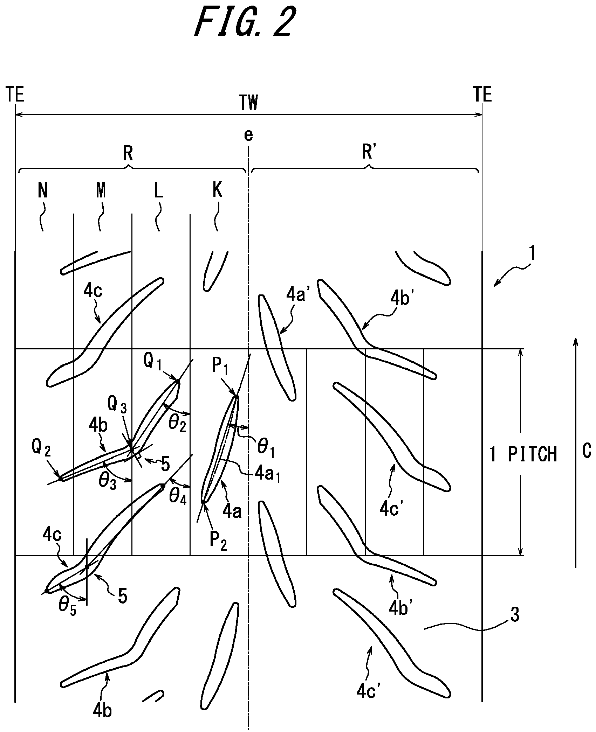

Here, FIG. 2 illustrates an embodiment of another pneumatic tire according to the present invention, in which a tread surface 1 of the tire is shown. Similarly to the above, the tread surface 1 has a directional tread pattern formed thereon.

The tread pattern herein includes at least three different oblique lug grooves 4, including, in the illustrated example, three different oblique lug grooves, namely, an oblique lug groove 4a, an oblique lug groove 4b, and an oblique lug groove 4c, each extending, from each of both contact ends $TE$ of the tread surface 1, in a direction converging to the tire equator line $e$. Here, the oblique lug groove extending from the tread contact end $TE$ in a direction converging to the tire equator line $e$ refers to an oblique lug groove extending diagonally so that one end at the posterior side of the groove in the tire rotation direction is directed toward the tread contact end $TE$ side while the other end at the anterior side thereof in the tire rotation direction is directed toward the tire equator line $e$, in which the groove extending on the tire equator line $e$ side does not necessarily need to be in a shape along the tire equator line $e$. Further, as illustrated in FIG. 2, a groove on the tire equator line *e* side is terminated at one end thereof before reaching the tire equator line *e*. Here, the direction converging to the tire equator line e refers to a direction converging in a direction (direction indicated by an arrow C of FIG. 2) along the forward rotation direction of the tire.

These three different oblique lug grooves 4a to 4c are independently arranged as being dispersed in tread half-width regions R, R' across the tire equator line *e* as a border therebetween, without intersecting with one another.

Then, the at least three different oblique lug grooves are arranged so as to be line-symmetric, for each type, namely, for each of the oblique lug grooves 4a, 4b, and 4c in this case, about the tire equator line *e* serving as the axis of symmetry. The oblique lug grooves thus arranged are displaced from each other in the tire circumferential direction between the half-width regions R, R', to thereby form a tread pattern. More specifically, as illustrated in FIG. 2, the oblique lug grooves 4a', 4b', 4c' disposed in the half-width region R' on the right in the paper plane across the tire equator line *e* are each arranged in a direction opposite to the oblique lug grooves 4a, 4b, 4c disposed in the half-width region R on the left in the paper plane across the tire equator line *e*, and the oblique lug grooves 4a, 4b, 4c and the oblique lug grooves 4a', 4b', 4c' thus arranged are shifted from each other by half the pitch in the tire circumferential direction between the half-width regions R and R'. In other words, the oblique lug groove 4a' corresponds to a horizontally-reversed shape of the oblique lug groove 4a, the oblique lug groove 4b' corresponds to a horizontally-reversed shape of the oblique lug groove 4b, and the oblique lug groove 4c' corresponds to a horizontally-reversed shape of the oblique lug groove 4c, in which, according to the present invention, the oblique lug grooves 4a to 4c each are the same type of each of the oblique lug grooves 4a' to 4c' formed in the half-width region on the opposite side.

Further, the remaining portion of the tread surface 1, other than the portions where the oblique lug grooves 4 are formed, is formed as the land portion 3.

As described above, another pneumatic tire according to the present invention employs a configuration in which a plurality of oblique lug grooves formed in each of the half-width regions, where each of the oblique lug grooves extends from the tread contact end in a direction converging to the tire equator line *e*, are arranged in the same direction in both of the half-width regions. Therefore, even when the contact area of the tire is changed in the tire width direction according to a camber angle applied thereto, grooves of the same type are still present in the same contact area, so that the same motion performance can be produced regardless of the amount of tilt of the tire.

Of the oblique lug grooves 4, the oblique lug groove 4a (hereinafter, referred to as "central oblique lug groove 4a") extending closest to the tire equator line *e* side is disposed in a central region *K* which accounts for an area of 12.5 % of the tread contact width *TW* from the tire equator line *e.* In the illustrated example of FIG. 2, the central oblique lug groove 4a is disposed as a whole within the central region *K*.

Then, in the present invention, it is essential that the central oblique lug groove 4a extend in a direction that allows an angle $\theta_1$ between a groove center line thereof and the tire equator line *e* to fall within a range of 9° to 23°. Here, the groove center line refers to a straight line passing through a tire width direction center $P_1$ of the central oblique lug groove 4a at the anterior end portion in the tire advancement direction and a tire width direction center $P_2$ of the central oblique lug groove at the posterior end portion in the tire advancement direction.

Further, in the present invention, it is essential that the central oblique lug groove 4a be formed to have an extending length of 120 mm or less over the entire length thereof. Here, the extending length over the entire length of the central oblique lug groove 4a refers to an entire length of a line $4a_1$ (line rendered as the alternate long and short dash line in FIG. 2) passing through the center in the tire width direction of the central oblique lug groove.

Meanwhile, in a pneumatic tire for an auto motorcycle, the tread center region of the tire mainly comes into contact with a road surface when the vehicle is running straight because the vehicle stands substantially upright with respect to a road surface. Therefore, the land portion of the tread center region hits the road surface when the tire is running straight, and the repeated hit sound of the land portion leads to generation of noise.

In view of the above, according to the present invention, the central oblique lug groove 4a positioned within the central region *K*, which most often comes into contact with a road surface when the tire is running straight, is formed to be at an angle $\theta_1$ of 9° to 23° with the tire equator line *e*. More specifically, the reason for defining the angle $\theta_1$ as described above is that the angle $\theta_1$ should be large enough to ensure a drainage path from the tire equator line e side to the tread contact end side located backward in the tire rotation direction while breaking a water film that enters between the tire and the contact road. Further, when the oblique angle of the central oblique lug groove approximates the contact contour of the tire, a larger groove wall region can be ensured when the tire comes out of contact with the contact road, to thereby suppress generation of noise. If the angle $\theta_1$ is larger than 23°, the central oblique lug groove 4a is directed toward the tire width direction so that the land portion 3 within the contact area is formed in a block shape, with the result that the land portion 3 is excited when the tire comes into contact with a road surface and is kicked out therefrom, leading to amplification of noise. On the other hand, the tangle $\theta_1$ smaller than 9° fails to sufficiently ensure the drainage performance and the capability of breaking a water film.

Further, for the purpose of improving the drainage performance, it is effective to ensure the groove area to thereby increase the negative ratio. On the other hand, however, the side wall of the land portion is increased, which leads to generation of partial wear starting therefrom. Therefore, the central oblique lug groove 4a is confined to fall within the aforementioned groove angles while limiting the extending length over the entire length to 120 mm or less so as to prevent reduction in rigidity of the land portion, to thereby attain excellent partial wear resistance while ensuring sufficient drainage performance.

Further, in the present invention, the oblique lug grooves in the same shape (same type) are symmetrically arranged about the tire equator line *e* as the axis of symmetry, and the oblique lug grooves formed in the half width regions across the tire equator line *e* are mutually displaced by half the pitch in the tire circumferential direction, to thereby prevent the oblique lug grooves in the same shape from simultaneously coming into contact with a road surface to generate noise at the same time. That is, the land portions on both sides across the tire equator line *e* as a boundary generate hit sound alternately, to thereby improve low noise performance.

Further, the central oblique lug groove 4a is disposed within the central region *K* without crossing the tire equator line *e*, at an inclination angle close to the tire circumferential direction, with the result that the land portion of the tire is increased in rigidity, to thereby improve the shear strength against a load applied in the forward direction and the backward direction of the tire. Therefore, the tire can be improved in wear resistance in running in the upright position which is unique to an auto motorcycle (such as a large motor scooter), so as to suppress generation of partial wear.

In the embodiment of FIG. 2, the central oblique lug groove 4a, the oblique lug groove 4b, and the oblique lug groove 4c are formed in order from the tire equator line *e* to the tread contact end *TE*. However, the oblique lug groove 4b and the oblique lug groove 4c may be freely disposed in the tire width direction and in the tire circumferential direction without any specific arrangement regularities, as long as the aforementioned central oblique lug groove 4a is disposed closest to the tire equator line *e* side.

Further, at least two different oblique lug grooves of the oblique lug grooves may preferably be disposed in an intermediate region *L* falling within a range of 12.5 % to 25 % of the tread contact width *TW* from the tire equator line *e*. Of the oblique lug grooves, oblique lug grooves other than the central oblique lug groove 4a disposed closest to the tire equator line *e* side may preferably be disposed in an intermediate region *M* falling within a range of 25 % to 37.5 % of the tread contact width *TW* from the tire equator line *e*. In the example of FIG. 2, the oblique lug grooves 4b and 4c are disposed in the intermediate region *L* and the intermediate region *M*. As described above, the oblique lug grooves are disposed even in the intermediate region *L* and in the intermediate region *M*, so that even when a camber angle is applied to the tire and a water film entering between the tire, a drainage path having a sufficient groove width in the tread region can be ensured and a water film entering between the tire and the contact road can be broken due to the edge effect of the grooves, to thereby improve wet performance. Further, with the objective of prioritizing wear resistance by ensuring the rigidity of the land portion, the tire width direction center $P_2$ at the posterior end of the central oblique lug groove may preferably be terminated within the central region *K* or within the intermediate region *L* falling within the range of 12.5 % to 25 % of the tread contact width *TW* from the tire equator line *e* as described later, without extending to the intermediate region *M*.

Further, at least two different oblique lug grooves of the oblique lug grooves 4, namely, the oblique lug grooves 4b and 4c in this case, may preferably be in a shape having a curved portion 5 which is curved outward toward the tire equator line *e* side. In this case, the central oblique lug groove 4a is also formed in a curved shape curved outward with a gentle curvature toward the tire equator line *e* side.

Here, in circular running of an auto motorcycle which applies a camber angle to the tire, the lateral input force applied from the tire equator line *e* side to the tread contact end side is increased in degree. Therefore, the oblique lug grooves disposed in a region beyond the central region *K* in the tire width direction are each formed in a curved shape so as to have a groove portion in a direction approximating the tire width direction, so as to ensure the rigidity as a pattern. As a result, the grip performance can be improved.

In order to attain the aforementioned function, the oblique lug groove 4b may preferably extend in a direction where the groove center line in the circumferential direction is at an angle $\theta_2$ of 20° to 35° with the tire equator line *e* and extend in a direction where the groove center line in the width direction is at an angle $\theta_3$ of 59° to 69° with the tire equator line *e*. Here, the groove center line in the circumferential direction refers to a straight line passing through the leading end portion $Q_1$ and a midpoint $Q_3$ in the tire advancement direction, the midpoint $Q_3$ being a midpoint between two points where the normal of the curved portion 5 intersects with the oblique lug groove 4b. Further, the groove center line in the width direction refers to a line passing through the trailing end portion $Q_2$ of the oblique lug groove 4b in the tire advancement direction and the aforementioned midpoint $Q_3$. In the case where the anterior end portion $Q_1$ and the posterior end portion $Q_2$ each have a tire width direction component, $Q_1$ and $Q_2$ are each defined as a midpoint of a line connecting the center in the width direction of the oblique lug groove at the anterior end portion or at the posterior end portion and an intersection point between a line in the tire circumferential direction passing through the center and the oblique lug groove.

Further, the oblique lug groove 4c may preferably extend in a direction where the groove center line in the circumferential direction is at an angle $\theta_4$ of 29° to 41° with the tire equator line *e*, and extend in a direction where the groove center line in the width direction is at an angle $\theta_5$ of 50° to 64° with the tire equator line *e*.

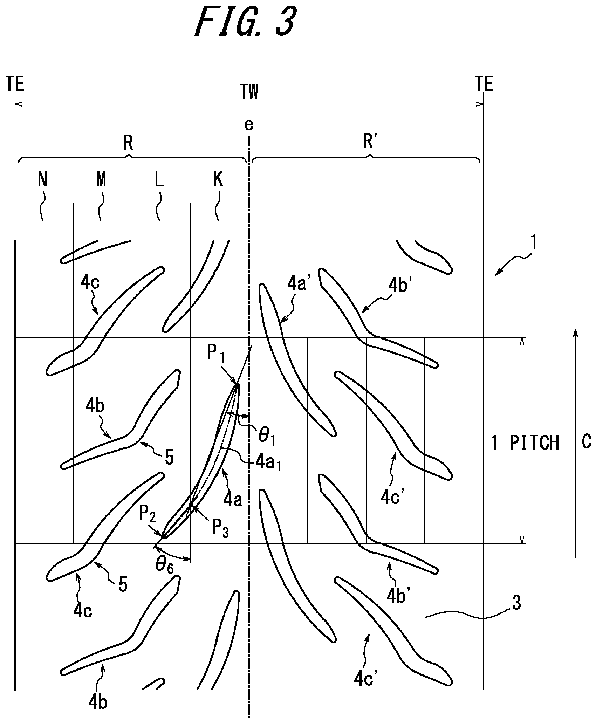

Next, another embodiment of another pneumatic tire according to the present invention is described with reference to FIG. 3 below.

A tread pattern of FIG. 3 is similarly configured as in the case of the aforementioned embodiments, except for the following points. That is, the central oblique lug groove 4a is disposed, in part thereof, in the intermediate region *L* falling within a range of 12.5 % to 25 % of the tread contact width *TW* from the tire equator line *e*.

More specifically, the posterior end $P_2$ of the central oblique lug groove 4a extends to the region *L* so as to terminate within the intermediate region *L*, rather than terminating within the central region *K*.

In this case, it is essential that the central oblique lug groove 4a extend, in the central region *K*, in a direction where the groove center line is at an angle $\theta_1$ of 9° to 23° with the tire equator line *e*, while extending, in the intermediate region *L*, in a direction where the groove center line is at an angle $\theta_6$ of 21° to 36 ° with the tire equator line *e*. The groove center line in the central region *K* is defined herein as a straight line connecting between an anterior end $P_1$ of the central oblique lug groove 4a and an intersection point $P_3$, the intersection point $P_3$ being an intersection point where the line $4a_1$ passing through the center of the central oblique lug groove 4a in the tire width direction intersects with a boundary between the central region *K* and the intermediate region *L*. Further, the groove center line in the intermediate region *L* refers to a straight line connecting between the posterior end $P_2$ of the central oblique lug groove 4a and the intersection point $P_3$.

It has already been described above that a hit sound of the land portion generated when the central region *K* comes into contact with a ground results in generation of noise. In this regard, in the vicinity of the boundary between the central region *K* and the intermediate region *L*, the vibration noise generated by the block when kicked out is apt to be increased. However, with the angle $\theta_1$ and the angle $\theta_6$ being maintained at the above-mentioned angle, the contact contour of the tire and the groove angle can be kept away from each other, which makes it possible to reduce noise. The reason why the angle $\theta_6$ is defined to be in the aforementioned range is as follows. That is, when the angle $\theta_6$ is smaller than 21°, the angle of the groove approximates the contact contour so that the groove wall surface is vibrated along a longer length when coming out of contact with the contact surface on the kick-out side, resulting in an increase in noise. When the angle $\theta_6$ is larger than 36°, the drainage performance on the contact end portion is degraded in running straight or at a small camber angle.

Further, as illustrated in FIG. 3, it is preferred that the oblique lug grooves other than the central oblique lug groove 4a, namely, the oblique lug grooves 4b and 4c herein, be each disposed, by 60 % or more of the opening area thereof, in a region on the outside in the tire width direction of the outermost end of the central oblique lug groove 4a in the tire width direction.

Specifically, as illustrated in FIG. 3, the oblique lug grooves 4b and 4c disposed in a region on the outside in the tire width direction of the intermediate region *L* are each disposed, by 60 % or more of the opening area thereof, in a region falling within a range between a straight line parallel to the equator line *e* while passing through the outermost end side in the tire width direction of the central oblique lug groove 4a, that is, the posterior end $P_2$ of the central oblique lug groove 4a, and 50 % of the tread contact width. Here, the opening area refers to an opening area on the tread surface 1.

As described above, a plurality of oblique lug grooves are evenly disposed across the entire region of the tread surface 1, so that the same type of grooves are arranged in the same contact area even when the contact area of the tire has been changed in the tire width direction according to a camber angle applied thereto, to thereby provide the same motion performance irrespective of the inclination of the tire.

EXAMPLES

(Example 1)

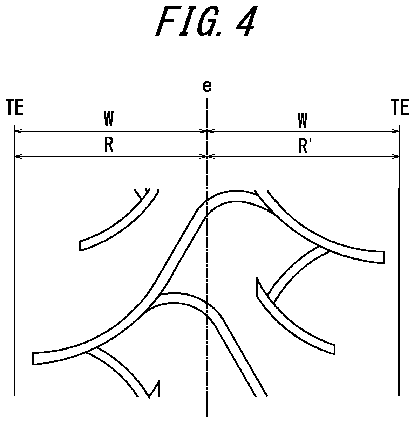

A tire in a size of MCR160/60R15M/C, which satisfies the relation shown in Table 1 and has a development plan view of the tread pattern illustrated in FIG. 1 above, was assembled to a wheel with a rim size of MT5.00, and used as a rear tire of an auto motorcycle of 500 cc displacement at a filling air pressure of 250 kPa. A tire having a tread pattern illustrated in the development plan view of FIG. 4 as a conventional product was assembled for use as a front tire. The front tire was in a size of MCR120/70R15M/C, with a rim size of MT3.50, at a filling air pressure of 225 kPa. The motorcycle provided with the aforementioned tires was driven on a test course, so as to investigate the grip performance on a wet road and the grip performance on a dry road of the rear tire, and the wear resistance of the tire. The results thereof are shown in FIG. 1, including a conventional example (Conventional Tire 1) where the tire having a pattern illustrated in FIG. 4 was assembled to the rear tire.

[Table 1]

| | Conventional Tire 1 | Conforming Tire 1 | Conforming Tire 2 | Comparative Tire 1 | Comparative Tire 2 |
|---|---|---|---|---|---|
| Tread pattern | FIG. 4 (Conventional shape) | FIG. 1 | FIG. 1 | FIG. 1 | FIG. 1 |
| 1-β/α | - | 0.047 | 0.098 | 0.2 | 0.25 |
| Range [%] satisfying N≥4 | - | 68 | 62 | 45 | 80 |
| Difference in negative ratio between Region A and Region B | - | 0.004 | 0.006 | 0.073 | 0.066 |
| Negative Ratio in a region of W/4 to right and left across the tire equator line e (index) | 100 | 86.14 | 88.9 | 86.03 | 82.96 |
| Grip performance on a wet road (index) | 100 | 101 | 103 | 93 | 92 |
| Grip performance on a dry road (index) | 100 | 104 | 107 | 106 | 99 |
| Wear Resistance (index) | 100 | 100 | 102 | 100 | 95 |

To investigate the grip performance on a wet road and the grip performance on a dry road, in-vehicle driving test was performed by a test rider, so that the amount of grip and the change in grip in response to the inclination of the tire were comprehensively determined as the grip performance, which was confirmed through feeling evaluation made by a test rider. Table 1 shows the results thereof as index values with a score of 100 representing Conventional Tire 1 as a conventional example. A larger number indicates higher grip performance with smaller change in grip force relative to a change of the camber angle, and more excellent drainage performance on a wet road.

To evaluate the wear resistance of the tire, the wear statuses of the tires after the completion of the aforementioned driving test were visually observed and compared to one another. The results thereof are shown in Table 1, which are indexed with a score of 100 representing the conventional tire 1 as a conventional example. A larger numerical value indicates more excellent wear resistance and a longer wear life.

As a result, the followings were confirmed. That is, tires with oblique lug grooves that do not satisfy the aforementioned Expressions (II), (III) (Comparative Tire 1, 2) are apt to be inferior in grip performance, particularly on a wet road, failing to attain sufficient performance. On the other hand, tires which satisfy the aforementioned Expressions (I) to (III) with a difference in negative ratio between the regions A and B being less than 0.01, and have a negative ratio in a range of W/4 on the right and left across the tire equator line e that is lower than the conventional tire 1 (Conforming Tires 1, 2) were all high in grip performance and excellent in wear resistance.

(Example 2)

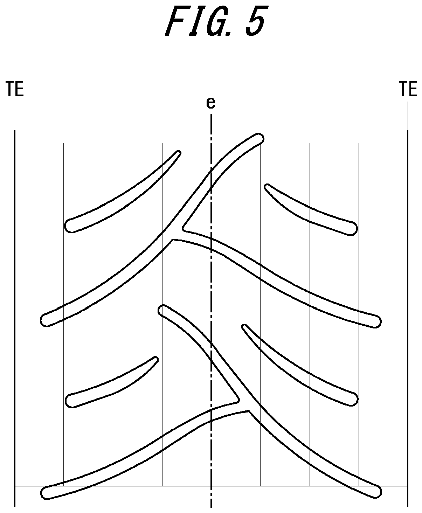

Following the patterns illustrated in FIGS. 2 and 3, a tire in a size of MCR160/60R15M/C was manufactured as a sample under the specifications shown in Table 2. Then, this tire was assembled to a wheel with a rim size of MT5.00, and used as a rear tire of an auto motorcycle of 500 cc displacement at a filling air pressure of 250 kPa. A tire having a tread pattern illustrated in the development plan view of FIG. 5 as a conventional product was assembled for use as a front tire. The front tire was in a size of MCR120/70R15M/C, with a rim size of MT3.50, at a filling air pressure of 225 kPa. The motorcycle provided with the aforementioned tires was driven on a test course, so as to investigate the noise level, the grip performance on a wet road and the grip performance on a dry road of the rear tire, and the wear resistance of the tire. Further, a bench test machine was also used to examine the noise level for the purpose of closely evaluating the stand-alone performance of the tire.

Table 2 shows the evaluation results obtained for Conforming Tire 3 which follows the pattern of FIG. 2 and Conforming Tire 4 which follows the pattern of FIG. 3, together the results obtained for Conventional Tire 2 where a tire having the pattern of FIG. 4 was assembled to the rear wheel.

[Table 2]

| | Conventional Tire 2 | Conforming Tire 3 | Conforming Tire 4 | Comparative Tire 3 | Comparative Tire 4 | Comparative Tire 5 | Comparative Tire 6 | Comparative Tire 7 |
|---|---|---|---|---|---|---|---|---|
| Tread pattern | FIG. 4 | FIG. 2 | FIG. 3 | FIG. 2 | FIG. 2 | FIG. 2 | FIG. 3 | FIG. 3 |
| θ1(°) | - | 16 | 16 | 8 | 24 | 16 | 16 | 16 |
| θ2(°) | - | 28 | 28 | 28 | 28 | 28 | 28 | 28 |
| θ3(°) | - | 65 | 65 | 65 | 65 | 65 | 65 | 65 |
| θ4(°) | - | 35 | 35 | 35 | 35 | 35 | 35 | 35 |
| θ5(°) | - | 60 | 60 | 60 | 60 | 60 | 60 | 60 |
| θ6(°) | - | - | 31 | - | - | - | 20 | 37 |
| Length (mm) of central oblique lug groove | - | 50 | 94 | 50 | 50 | 130 | 94 | 94 |
| Noise level | 100 | 112 | 110 | 112 | 98 | 101 | 99 | 110 |
| Grip performance on wet road | 100 | 101 | 105 | 98 | 101 | 105 | 106 | 99 |
| Wear resistance | 100 | 103 | 100 | 103 | 103 | 96 | 101 | 100 |

EP 2 762 332 B1

The noise levels of the tires were determined by subjecting a real vehicle to acceleration noise measurement set forth in the safety standards and by calculating an overall value from a sound pressure waveform obtained in the stand-alone measurement of the tire in the bench test machine. Table 2 shows the measurement results obtained for the sample tires as index values with a score of 100 representing Conventional Tire 2 as a conventional example. The larger number indicates a lower noise level with reduced noise. In the measurement of a real vehicle, the noise level was improved by 2 % under the influence of the sound insulation (attained by, for example, a cowl muffler) on the used vehicle side, whereas the noise level was improved by 10 % in the measurement by the bench test machine.

To investigate grip performance on a wet road, in-vehicle driving test was performed by a test rider, so that the amount of grip and the change in grip in response to the inclination of the tire were comprehensively determined as grip performance, which was confirmed through feeling evaluation made by a test rider. Table 2 shows the results thereof as index values with a score of 100 representing Conventional Tire 2. A larger number indicates higher grip performance with a smaller change in grip force relative to a change of the camber angle, and more excellent drainage performance.

To evaluate the wear resistance of the tire, the depth of wear after the completion of the aforementioned driving test was subjected to comparison through depth gauge measurement. Table 2 shows the results thereof as index values with a score of 100 representing Conventional Tire 2 as a conventional example. A larger value indicates more excellent wear resistance.

As a result, the followings were confirmed. That is, Conforming Tire 3 and Conforming Tire 4 both excel in noise level and grip performance on a wet road and also in wear resistance, as compared to Conventional Tire 2. The tires (Comparative Tires 3 and 4) each having the angle $\theta_1$ falling outside the range of 9° to 23° are apt to be inferior to Conforming Tire 3 in grip performance when the angle $\theta_1$ is smaller than 9° while being inferior in noise level and grip performance on a wet road when the angle $\theta_1$ exceeds 23°. Further, in the case where the length of the central oblique lug groove exceeds 120 mm (Comparative Tire 5), the tire is apt to be inferior to Conforming Tire 3 in noise level and wear resistance. Further, the tires (Comparative Tires 6 and 7) having the angle $\theta_6$ falling out of the range of 21° to 36° are apt to be inferior to Conforming Tire 4 in noise level when the angle $\theta_6$ is smaller than 21° while being inferior in grip performance on a wet road when the angle $\theta_6$ exceeds 36°.

INDUSTRIAL APPLICABILITY

The present invention is capable of stably providing a novel pneumatic tire for an auto motorcycle, that is capable of improving grip performance and attaining excellent wear resistance while ensuring drainage performance during running on a wet road, and further capable of effecting noise reduction during running.

REFERENCE SIGNS LIST

1 tread surface
2 set of oblique lug grooves
2a first oblique lug groove
2b second oblique lug groove
2c third oblique lug groove
$2a_1$ posterior end of first oblique lug groove
$2a_2$ anterior end of first oblique lug groove
$2a_3$ convex portion of first oblique lug groove
$2a_4$ center line of first oblique lug groove
3 land portion
4a central oblique lug groove
4b oblique lug groove
4c oblique lug groove
$4a_1$ line passing through the center in the tire width direction of the central oblique lug groove 4a
5 curved portion
e tire equator line
m tire meridian
$P_1$ center in tire width direction at anterior end portion of central oblique lug groove 4a
$P_2$ center in tire width direction at posterior end portion of central oblique lug groove 4a
$P_3$ intersection where line $4a_1$ intersects with boundary between regions K and L
R, R' half-width region
TE tread contact end

TW tread contact width

## Claims

1. A pneumatic tire for an auto motorcycle, having a directional tread pattern including a plurality of different grooves formed on a tread surface (1), the grooves each converging forward in a rotation direction of the tire,
wherein the plurality of different grooves are formed as three different oblique lug grooves (2a,2b,2c) extending, in a development plan view of the tread pattern, from a tread contact end TE of the tire to a tire equator line as being curved to be deflected to the tire equator line side;
wherein the three different oblique lug grooves include a first oblique lug groove (2a) having an extending length of $\alpha$, a second oblique lug groove (2b) having an extending length of $\beta$, and a third oblique lug groove (2c) having an extending length of $\gamma$, **characterized by** the extending lengths $\alpha$, $\beta$, $\gamma$ satisfying the following Expressions (I), (II):

$$\beta \leq \gamma < \alpha \ (I),$$

$$1 - \beta/\alpha < 0.1 \ (II);$$

and
wherein the number $n$ of the oblique lug grooves each intersecting with a meridian (m) of the tire is defined to satisfy the following Expression (III): $n \geq 4$ (III), within a range of 60 % to 70 % of the entire circumference of the tire.

2. The pneumatic tire for an auto motorcycle according to Claim 1,
wherein the tread pattern includes, in a development plan view, four regions for one pitch in the circumferential direction, the four regions being obtained by equally dividing the tread width into quarters from the tire equator (e) line to the tread contact end (TE); and
wherein the four regions include a second region $A$ and a third region $B$ to the tire equator line, the second region $A$ and the third region $B$ each having a negative ratio $a$ and a negative ratio $b$, respectively, the negative ratio $a$ and the negative ratio $b$ being different from each other by less than 0.01.

## Patentansprüche

1. Luftreifen für ein zweirädriges Fahrzeug, aufweisend ein gerichtetes Laufflächenmuster, umfassend eine Mehrzahl von unterschiedlichen Rillen, welche auf einer Lauffläche (1) ausgebildet sind, wobei jede Rille vorwärts in der Drehrichtung des Reifens zusammenlaufen,
wobei die Mehrzahl von unterschiedlichen Rillen in der Form von drei unterschiedlichen quergerichteten Stollenrillen (2a, 2b, 2c) geformt sind, welche sich, in einer Entwicklungsebenensicht des Laufflächenmusters, von einem Laufflächenkontaktende TE des Reifens bis zu einer Reifenäquatorlinie e erstrecken, indem sie so gekrümmt sind, dass sie zur Seite der Reifenäquatorlinie abgebogen sind;
wobei die drei unterschiedlichen quergestellten Stollenrillen eine erste quergerichtete Stollenrille (2a), welche eine Erstreckungslänge $\alpha$ aufweist, eine zweite quergerichtete Stollenrille (2b), welche eine Erstreckungslänge $\beta$ aufweist, und eine dritte quergerichtete Stollenrille (2c), welche eine Erstreckungslänge $\gamma$ aufweist, umfassen, **dadurch gekennzeichnet, dass**
die Erstreckungslängen $\alpha$, $\beta$, $\gamma$ die folgenden Ausdrücke (I), (II) erfüllen:

$$\beta \leq \gamma < \alpha \ (I), \ 1 - \beta/\alpha < 0,1 \ (II);$$

und
wobei die Anzahl $n$ von quergerichteten Stollenrillen, welche sich jeweils mit einem Meridian (m) kreuzen, so definiert ist, dass sie den folgenden Ausdruck (III) erfüllt: $n \geq 4$ (III), innerhalb eines Bereiches zwischen 60% und 70% des gesamten Umfangs des Reifens.

2. Luftreifen für ein zweirädriges Kraftfahrzeug nach Anspruch 1, wobei das Laufflächenmuster, in einer Entwicklungsebenensicht gesehen, vier Bereiche für eine Steigung in der Umfangsrichtung umfasst, wobei die vier Bereiche durch gleichmäßiges Aufteilen der Laufflächenbreite in Viertel von der Reifenäquatorlinie (3) zum Laufflächenkontaktende (TE) erhalten werden; und

wobei die vier Bereiche einen zweiten Bereich *A* und einen dritten Bereich *B* zur Reifenäquatorlinie umfassen, wobei der zweite Bereich *A* und der dritte Bereich *B* jeweils ein negatives Verhältnis *a* und ein negatives Verhältnis *b* aufweisen, wobei das negative Verhältnis *a* und das negative Verhältnis *b* sich um weniger als 0,01 voneinander unterscheiden.

**Revendications**

1. Pneu pour motocyclette, ayant une sculpture de bande de roulement directionnelle comprenant une pluralité de rainures différentes formées sur une surface de bande de roulement (1), les rainures convergeant chacune vers l'avant dans une direction de rotation du pneu,

   dans lequel la pluralité de rainures différentes sont formées en tant que trois rainures de barrettes obliques différentes (2a, 2b, 2c) s'étendant, dans une vue en plan de développement de la sculpture de bande de roulement, d'une extrémité de contact de bande de roulement TE du pneu à une ligne médiane de pneu e en étant incurvée pour être déviée vers le côté de ligne médiane de pneu ;

   dans lequel les trois rainures de barrettes obliques différentes comprennent une première rainure de barrette oblique (2a) ayant une longueur en extension de $\alpha$, une deuxième rainure de barrette oblique (2b) ayant une longueur en extension de $\beta$, et une troisième rainure de barrette oblique (2c) ayant une longueur en extension de $\gamma$, **caractérisé en ce que**

   les longueurs en extension $\alpha$, $\beta$, $\gamma$ satisfont les expressions (I), (II) suivantes :

   $$\beta \leq \gamma < \alpha \; (I), \; 1 - \beta/\alpha < 0{,}1 \; (II) ;$$

   et

   dans lequel le nombre *n* des rainures de barrettes obliques croisant chacune un méridien (m) du pneu est défini pour satisfaire l'expression (III) suivante : $n \geq 4$ (III), dans une plage de 60 % à 70 % de toute la circonférence du pneu.

2. Pneu pour motocyclette selon la revendication 1,

   dans lequel la sculpture de bande de roulement comprend, dans une vue en plan de développement, quatre régions pour un pas dans la direction circonférentielle, les quatre régions étant obtenues en divisant de manière égale la largeur de bande de roulement en quartiers de la ligne médiane de pneu (e) à l'extrémité de contact de bande de roulement (TE) ; et

   dans lequel les quatre régions comprennent une deuxième région *A* et une troisième région *B* de la ligne médiane de pneu, la deuxième région *A* et la troisième région *B* ayant chacune un rapport négatif *a* et un rapport négatif *b*, respectivement, le rapport négatif *a* et le rapport négatif *b* étant différents l'un de l'autre de moins de 0,01.

# FIG. 1

# *FIG. 2*

# FIG. 3

# FIG. 4

# *FIG. 5*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H4238703 A

- JP 2010285103 A